# EUROPÄISCHE PATENTSCHRIFT

(11) **EP 2 966 473 B1**
(45) Veröffentlichungstag und Bekanntmachung des Hinweises auf die Patenterteilung: **30.11.2016**
(21) Anmeldenummer: 14176706.1
(22) Anmeldetag: 11.07.2014
(51) Int. Cl.: G01B 11/04, G01S 17/10, G01S 17/87, G01S 7/487

(54) **Verfahren zur Vermessung eines Objekts**
Method for measuring an object
Procédé de mesure d'un objet

(43) Veröffentlichungstag der Anmeldung: 13.01.2016
(73) Patentinhaber: SICK AG, 79183 Waldkirch/Breisgau (DE)
(72) Erfinder: Nübling, Achim, 79312 Emmendingen (DE); Harter, Thorsten, 77799 Ortenberg (DE); Ehrler, Carsten, 79111 Freiburg (DE)
(74) Vertreter: Manitz, Finsterwald & Partner GbR

(56) Entgegenhaltungen:
- EP-A1- 2 455 780
- DE-A1-102012 021 831
- US-A1- 2003 218 919
- JIHYU YOON ET AL: "LADAR based obstacle detection in an urban environment and its application in the DARPA Urban challenge", CONTROL, AUTOMATION AND SYSTEMS, 2008. ICCAS 2008. INTERNATIONAL CONFERENCE ON, IEEE, PISCATAWAY, NJ, USA, 14. Oktober 2008 (2008-10-14), Seiten 581-585, XP031367956, ISBN: 978-89-950038-9-3

## Beschreibung

Die vorliegende Erfindung betrifft ein Verfahren zur Vermessung eines Objekts mittels zumindest eines ersten Laserscanners, welcher für eine Vielzahl von Messpunkten Messwerte erfasst, wobei zur Vermessung des Objekts nur Messwerte verwendet werden, die über einem vorbestimmten Schwellenwert liegen, wobei für zumindest zwei Bereiche von Messpunkten des Laserscanners ein jeweiliger Schwellenwert separat ermittelt wird.

Laserscanner werden in einer Vielzahl von Anwendungen zur Vermessung von Objekten verwendet, beispielsweise um die Anwesenheit, die Lage, die Länge, die Breite und/oder die Höhe oder den Abstand eines Objekts zu ermitteln. Bevorzugt kommen Laserscanner dabei in der Automatisierungstechnik zum Einsatz, um zum Beispiel auf Förderbändern oder Schalensortern transportierte Objekte zu vermessen. Beispielsweise bei Paket- oder Briefsortieranlagen wird insbesondere die Höhe von Paketen und Briefen mittels Laserscannern bestimmt.

Ein Laserscanner, welcher die Stärke eines Empfangssignals mit einer Detektionsschwelle vergleicht ist aus der DE 10 2012 021 831 A1 bekannt. Die US 2003/0218919 A1 beschreibt einen Laserscanner mit einer entfernungsabhängigen Detektionsschwelle. Eine Fusion der Daten mehrerer Laserscanner wird in "LADAR based Obstacle Detection in an Urban Environment and its Application in the DARPA Urban Challenge" (ICCAS 2008 - ISBN: 978-89-950038-9-3) beschrieben.

Üblicherweise werden zum Beispiel Kantentrefferfilter oder Medianfilter verwendet, um die von dem Laserscanner erfassten Messwerte zu filtern. Die so gefilterten Messwerte werden anschließend unter Verwendung eines einfachen Schwellenwertverfahrens weiterverarbeitet. Dazu wird wegen des statistischen Rauschens der Messwerte des Laserscanners ein Schwellenwert vorgesehen, wobei zur Vermessung des Objekts nur Messwerte herangezogen werden, die über dem Schwellenwert liegen.

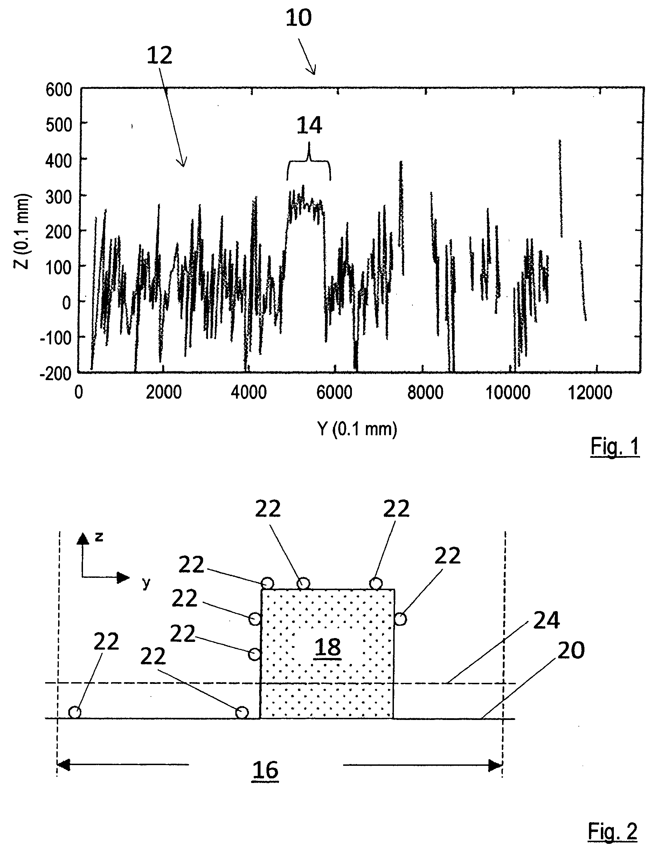

Nachteiligerweise unterliegen die Messwerte eines Laserscanners immer einem gewissen Rauschen (siehe Fig. 1), so dass der von dem Rauschen abhängige Schwellenwert relativ hoch gewählt werden muss, was insbesondere die Vermessung flacher Objekte erschwert. Flache Objekte können dann nicht zuverlässig und damit eichrelevant vermessen werden.

Der Erfindung liegt somit die Aufgabe zugrunde, ein Verfahren zur Vermessung eines Objekts mittels eines Laserscanners anzugeben, welches eine zuverlässige und stabile Vermessung auch von flachen Objekten gestattet.

Erfindungsgemäß wird diese Aufgabe durch das Verfahren gemäß Anspruch 1 und insbesondere dadurch gelöst, dass.der Schwellenwert aufgrund des Einfallswinkels des Lichtsignals des Laserscanners auf das Objekt berechnet wird.

Die Erfindung macht sich dabei die Erkenntnis zunutze, dass der zu verwendende Schwellenwert nicht für jeden Messpunkt des Laserscanners gleich sein muss. Dementsprechend wird ein jeweiliger Schwellenwert für zumindest zwei Bereiche von Messpunkten des Laserscanners separat ermittelt, wobei die Auswahl des Schwellenwerts in Abhängigkeit des Einfallswinkels des Lichtsignals des Laserscanners auf das Objekt erfolgt.

Aufgrund der Verwendung von zumindest zwei Bereichen von Messpunkten und damit der Verwendung von zumindest zwei Schwellenwerten kann zumindest einer der Schwellenwerte niedriger sein, als ein herkömmlicher, für den gesamten Messbereich des Laserscanners ermittelter Schwellenwert. Durch den zumindest bereichsweise niedrigeren Schwellenwert können dann auch niedrigere und damit flachere Objekte vermessen werden.

In der Regel umfasst der Laserscanner einen Lichtsender zur Aussendung von Lichtsignalen, eine Lichtablenkeinheit (gebildet zum Beispiel durch einen rotierenden Spiegel) zur periodischen Ablenkung der vom Lichtsender ausgesandten Lichtsignale in einen Erfassungsbereich und einen Lichtempfänger zum Empfangen von von einem sich im Erfassungsbereich befindlichen Objekt zurückgeworfenen Licht. Mittels des Lichtsignals kann ein linienförmiger (eindimensionaler) oder rechteckiger (zweidimensionaler) Bereich mittels des Laserscanners abgetastet werden, in welchem sich die Messpunkte befinden. Üblicherweise wird für jeden Messpunkt zumindest ein Messwert erfasst. Anschließend wird der Messwert mit dem für den Bereich des Messpunkts, dem der Messwert zugeordnet ist, gültigen Schwellenwert verglichen. Ist der Messwert größer als der jeweilige Schwellenwert, wird der Messwert zur Vermessung des Objekts herangezogen.

Auch kann mittels des Lichtsignals ein linienförmiger Bereich abgetastet werden, wobei das zu vermessende Objekt z.B. von einem Förderband, in der Regel senkrecht zu dem linienförmigen Bereich, bewegt wird, um das Objekt als Ganzes zu vermessen.

Insbesondere geben die Messwerte des Laserscanners eine Distanz zu dem Laserscanner an. Die Distanz wird von dem Laserscanner dazu z.B. mittels einer Laufzeitmessung des Lichtsignals zu dem jeweiligen Messpunkt oder einer laufzeitbedingten Phasenverschiebung eines modulierten Signales berechnet. Die Zuordnung der gemessenen Distanz zu einem Messpunkt erfolgt dabei mittels des Winkels, unter welchem der Laserscanner das jeweilige Lichtsignal ausgesandt hat. Mit der bekannten Distanz z.B. des Förderbandes, d.h. des Hintergrunds des Objekts, kann dann beispielsweise die Höhe des Objekts ermittelt werden. Dementsprechend können die Messwerte auch Höhenmesswerte sein.

Vorteilhafte Ausführungsformen der Erfindung sind in der Beschreibung, den Zeichnungen sowie den Unteransprüchen beschrieben.

Gemäß einer vorteilhaften Ausführungsform wird der Schwellenwert für jeden Messpunkt des Laserscanners separat ermittelt. Dies bedeutet, dass für jeden Messpunkt der niedrigstmögliche Schwellenwert verwendet werden kann. Alternativ kann auch für Gruppen von z.B. jeweils zwei, drei, vier, zehn oder hundert Messpunkten jeweils ein gemeinsamer Schwellenwert ermittelt werden.

Besonders bevorzugt wird der Schwellenwert auch aufgrund des statistischen Rauschens des Messwerts eines Messpunkts berechnet. Der Schwellenwert eines einzelnen Messpunkts kann dann beispielsweise auf die doppelte Standardabweichung (2σ) oder die dreifache Standardabweichung (3σ) des statistischen Rauschens festgelegt werden. Wird ein Schwellenwert für mehrere Messpunkte oder für einen Bereich von Messpunkten ermittelt, kann beispielsweise der Durchschnitt oder der Median des statistischen Rauschens der jeweiligen Messwerte zugrunde gelegt werden.

Erfindungsgemäß wird der Schwellenwert aufgrund des Einfallswinkels des Lichtsignals des Laserscanners berechnet. Der Einfallswinkel des Lichtsignals beeinflusst die Messgenauigkeit des Laserscanners insofern, dass besonders genaue Messwerte möglich sind, wenn das Lichtsignal senkrecht auf eine zu vermessende Oberfläche auftrifft. Der Schwellenwert kann somit aufgrund des Einfallswinkels des Lichtsignals berechnet werden, wobei der Einfallswinkel zugleich auch ein Gütemaß darstellt. Folglich kann allgemein in Abhängigkeit des Einfallswinkels der verwendete Schwellenwert ausgewählt werden kann, unabhängig davon, wie der Schwellenwert ermittelt worden ist. Ein Gütemaß ist allgemein ein die Messgenauigkeit des Laserscanners beeinflussender Parameter. Das Gütemaß beschreibt somit indirekt die Messgenauigkeit des Laserscanners und damit die Höhe des zu verwendenden Schwellenwerts.

Ebenfalls zusätzlich wird der Schwellenwert aufgrund einer gemessenen Distanz berechnet. Dabei liegt die Erkenntnis zugrunde, dass die Messgenauigkeit des Laserscanners abnimmt, wenn der Laserscanner größere Distanzwerte misst. Der Messwert der Distanz kann dabei zugleich auch als Gütemaß verwendet werden, das heißt der zu verwendende Schwellenwert kann aufgrund der von dem Laserscanner gemessenen Distanz, beispielsweise zu dem Objekt, entsprechend ausgewählt werden.

Weiterhin zusätzlich wird der Schwellenwert aufgrund einer bekannten Eigenschaft eines Hintergrunds des Objekts berechnet. Der Hintergrund des Objekts kann beispielsweise ein Förderband sein, das eine bekannte Farbe oder einen bekannten Fugenabstand zwischen einzelnen Förderplatten aufweist. Beispielsweise kann mittels des Laserscanners der Abstand der Fugen der Förderplatten gemessen werden. Für den Fall, dass der gemessene Fugenabstand mit dem bekannten Fugenabstand sehr genau übereinstimmt, kann davon ausgegangen werden, dass die Messgenauigkeit des Laserscanners hoch ist. Dementsprechend kann dann ein niedriger Schwellenwert festgelegt werden. Im umgekehrten Fall wird der Schwellenwert bei einer ungenauen Messung erhöht, d.h. dann, wenn der gemessene Fugenabstand und der bekannte Fugenabstand weit voneinander abweichen. Dabei kann die gemessene bekannte Eigenschaft des Hintergrunds des Objekts wiederum zugleich auch als Gütemaß dienen, das heißt aufgrund der Eigenschaft wird der Schwellenwert sowohl ermittelt als auch ausgewählt.

Grundsätzlich kann der Schwellenwert auf der Grundlage eines Parameters, z.B. des statistischen Rauschens, berechnet und anhand eines Gütemaßes ausgewählt werden, welches auf einem anderen Parameter, z.B. dem Einfallswinkel oder der Remission, basiert.

Bevorzugt wird der Schwellenwert für jeden Messpunkt des Laserscanners in einer Nachschlagetabelle gespeichert. Aufgrund der Speicherung muss der jeweilige Schwellenwert nur einmalig ermittelt und ausgewählt werden und kann im Betrieb des Laserscanners der Nachschlagetabelle entnommen werden. Auf diese Weise kann das Verfahren und damit die Geschwindigkeit des Betriebs des Laserscanners erhöht werden.

Gemäß einer weiteren vorteilhaften Ausführungsform werden die Schwellenwerte mittels eines FPGAs (Field Programmable Gate Array) oder einer GPU (Graphics Processing Unit) ermittelt und/oder ausgewählt. Insbesondere FPGAs sind für spezifische, wiederkehrende Aufgaben besonders geeignet und ermöglichen somit eine schnelle und kostengünstige Durchführung des Verfahrens.

Gemäß einer weiteren vorteilhaften Ausführungsform wird das Verfahren für jeden Messpunkt des Laserscanners wiederholt. Somit kann für jeden Messpunkt des Laserscanners der jeweils gültige Schwellenwert festgelegt werden.

Besonders bevorzugt wird zumindest ein zweiter Laserscanner verwendet, wobei sich die Messbereiche des ersten Laserscanners und des zweiten Laserscanners überdecken und für Messpunkte aus dem Überdeckungsbereich jeweils der niedrigere bzw. niedrigste der ermittelten Schwellenwerte ausgewählt wird. Auf diese Weise wird für jeden individuellen Messpunkt der für diesen Messpunkt genaueste Laserscanner und damit der niedrigste Schwellenwert herangezogen, wodurch die Genauigkeit der Vermessung des Objekts weiter erhöht werden kann.

Insbesondere können auch drei oder mehr Laserscanner mit sich überdeckenden Messpunkten verwendet werden, wobei die Laserscanner insbesondere derart angeordnet sein können, dass sich Bereiche mit niedriger Messgenauigkeit und damit mit hohem Schwellenwert des einen Laserscanners, und Bereiche eines anderen Laserscanners, mit dort hoher Messgenauigkeit, überdecken.

Bevorzugt kann für den oder jeden Laserscanner der Schwellenwert mittels einer Funktion bestimmt werden, aus welcher sich ein Schwellenwertverlauf ergibt. Insbesondere kann die Funktion auf der Grundlage einer Parabelgleichung (y = ax² + bx + c) bestimmt werden. Dazu kann die Krümmung aus dem jeweiligen statistischen Rauschen des jeweiligen Laserscanners für verschiedene Messpunkte ermittelt werden. Die Bestimmung des Tiefpunkts kann auf der Grundlage der Position des Laserscanners erfolgen. Der Minimalwert kann z.B. auf das dreifache der minimalen Standardabweichung der Messwerte des Laserscanners festgelegt werden (3σₘᵢₙ).

Gemäß einer vorteilhaften Ausführungsform wird zur Erfassung von Messwerten für einen jeweiligen Messpunkt bei einer Anordnung mit mehreren Laserscannern derjenige Laserscanner verwendet, dem für diesen Messpunkt der niedrigste der ermittelten Schwellenwerte zugeordnet ist. Es wird bei mehreren vorhandenen Laserscannern also jeweils der Laserscanner zur Ermittlung von Messwerten für einen Messpunkt eingesetzt, der üblicherweise die genauesten Messwerte liefert.

Die Erfindung betrifft weiterhin einen Laserscanner zur Vermessung eines Objekts in einem Erfassungsbereich, mit einem Lichtsender zur Aussendung von Lichtsignalen, einer Lichtablenkeinheit zur Ablenkung der vom Lichtsender ausgesandten Lichtsignale in den Erfassungsbereich, einem Lichtempfänger zum Empfangen von von dem sich im Erfassungsbereich befindlichen Objekt zurückgeworfenen Licht, wobei der Laserscanner ausgebildet ist, für eine Vielzahl von Messpunkten Messwerte zu erfassen und zur Vermessung des Objekts nur Messwerte zu verwenden, die über einem vorbestimmten Schwellenwert liegen, und wobei der Laserscanner eine Auswerteeinheit umfasst, welche ausgebildet ist, für zumindest zwei Bereiche von Messpunkten einen jeweiligen Schwellenwert separat zu ermitteln und den für einen Messpunkt verwendeten Schwellenwert in Abhängigkeit des Einfallswinkels des Lichtsignals des Laserscanners auf das Objekt zu berechnen.

Ferner umfasst die Erfindung eine Anordnung von zumindest zwei Laserscannern der voranstehend erläuterten Art, mit sich zumindest bereichsweise überdeckenden Erfassungsbereichen. Die Anordnung zeichnet sich dadurch aus, dass die Auswerteeinheiten ausgebildet sind, für Messpunkte aus dem Überdeckungsbereich jeweils den niedrigeren bzw. niedrigsten Schwellenwert auszuwählen. Auf diese Weise können, wie bereits erläutert, die Vorteile mehrerer Laserscanner zur verbesserten Vermessung insbesondere flacher Objekte herangezogen werden.

Bevorzugt sind die Auswerteeinheiten ausgebildet, zur Erfassung von Messwerten für einen jeweiligen Messpunkt denjenigen Laserscanner zu verwenden, dem der niedrigere der ermittelten Schwellenwerte zugeordnet ist.

Für den erfindungsgemäßen Laserscanner und die Anordnung aus zumindest zwei Laserscannern gelten die mit Bezug auf das Verfahren getroffenen Aussagen entsprechend.

Nachfolgend wird die Erfindung rein beispielhaft anhand einer möglichen Ausführungsform unter Bezugnahme auf die beigefügten Zeichnungen beschrieben. Es zeigen:
- Fig. 1: ein Messsignal eines Laserscanners des Standes der Technik;
- Fig. 2: ein Objekt mit Messpunkten zur Vermessung des Objekts;
- Fig. 3: das statistische Rauschen der Messwerte dreier Laserscanner in bezüglich des Messbereiches unterschiedlichen Positionen; und
- Fig. 4: Schwellenwerte solcher drei Laserscanner sowie die jeweils ausgewählten Schwellenwerte.

Fig. 1 zeigt eine Messung 10 mit in Richtung der Ordinate angetragenen Höhenmesswerten 12 einer Messung eines (nicht gezeigten) Laserscanners. Die Höhenmesswerte 12 erstrecken sich über einen länglichen Bereich von 1200 mm, welcher auf der Abszisse angetragen ist. Die Höhenmesswerte 12 sind aus von dem Laserscanner aufgenommenen Distanzmesswerten aus der Laserpulslaufzeit berechnet, wobei der Abstand des Laserscanners zu einem Hintergrund eines Objekts bekannt ist. Der Hintergrund ist z.B. ein Förderband 20 (Fig. 2).

Im Abszissenbereich zwischen etwa 400 und 600 mm liegen Höhenmesswerte 14 eines Objekts 18 (Fig. 2) vor. Die übrigen Höhenmesswerte 12 stammen nicht von dem Objekt 18 sondern von dem Förderband 20 und sollten im Idealfall den Messwert Null zeigen. Die dargestellten realen Höhenmesswerte 12 weisen jedoch ein statistisches Rauschen auf, das zu ungenaueren Höhenmesswerten 12 führt.

Fig. 2 zeigt einen Erfassungsbereich 16 eines Laserscanners, in welchem sich ein Objekt 18, beispielsweise ein Postpaket, auf einem Förderband 20 befindet, wobei das Förderband 20 den Hintergrund zu dem Objekt 18 bildet. In Fig. 2 sind mehrere Messpunkte 22 dargestellt, mit welchen das Objekt 18 vermessen wird. Weiterhin ist ein herkömmlicher Schwellenwert 24 eingezeichnet, der für den gesamten Erfassungsbereich gleich ist und damit dem Stand der Technik entspricht. Zur Vermessung des Objekts 18 werden diejenigen zwei Messpunkte 22 nicht berücksichtigt, die unterhalb des herkömmlichen Schwellenwerts 24 liegen.

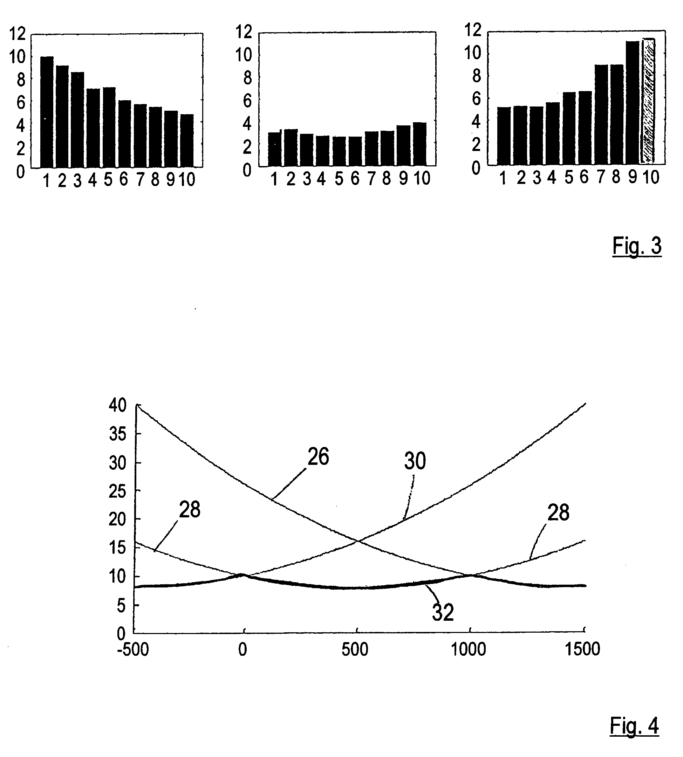

Für eine erfindungsgemäße Ermittlung des Schwellenwerts wird beispielsweise das statistische Rauschen eines Laserscanners herangezogen. Als Ausführungsbeispiel sind in Fig. 3 drei Diagramme gezeigt, welche das statistische Rauschen eines ersten Laserscanners (links), eines zweiten Laserscanners (Mitte) und eines dritten Laserscanners (rechts) für jeweils zehn Bereiche darstellen. Jeder der zehn Bereiche kann beispielsweise von 100 Messpunkten 22 gebildet sein. Der erste, zweite und dritte Laserscanner ist jeweils oberhalb des Förderbands 20 angeordnet, wobei der erste Laserscanner oberhalb der rechten Kante des Förderbands 20, der zweite Laserscanner mittig über dem Förderband 20 und der dritte Laserscanner oberhalb der linken Kante des Förderbands 20 angebracht ist.

Dementsprechend treffen die Lichtsignale des zweiten Laserscanners insbesondere in der Mitte des Förderbands 20 senkrecht auf das Förderband 20 oder das Objekt 18 auf, weshalb hier das statistische Rauschen am geringsten ist. Andererseits ist beispielsweise das statistische Rauschen für den ersten Laserscanner an der rechten Kante des Förderbands 20 am geringsten, da hier die Lichtsignale des ersten Laserscanners nahezu senkrecht auf das Förderband 20 oder das Objekt 18 auftreffen. An der linken Kante des Förderbands 20 treffen die Lichtsignale des ersten Laserscanners hingegen relativ "flach" auf, wodurch das statistische Rauschen des ersten Laserscanners in diesem Bereich am höchsten ist. Analog gelten diese Ausführungen ebenfalls für den dritten Laserscanner.

Aus dem in Fig. 3 gezeigten statistischen Rauschen können für die Laserscanner Schwellenwertverläufe bestimmt werden, die in Fig. 4 dargestellt sind. Die Schwellenwertverläufe weisen eine Parabelform auf und sind in Fig. 4 in einem Diagramm dargestellt. Der Schwellenwertverlauf des ersten Laserscanners ist mit dem Bezugszeichen 26, derjenige des zweiten Laserscanners mit dem Bezugszeichen 28 und der Schwellenwertverlauf des dritten Laserscanners ist mit dem Bezugszeichen 30 gekennzeichnet.

Von den somit jeweils drei möglichen Schwellenwerten für jeden Messpunkt 22 wird jeweils der niedrigste Schwellenwert der Schwellenwertverläufe 26, 28, 30 ausgewählt, wodurch sich die mit 32 bezeichnete Kurve der adaptiven Schwellenwerte ergibt.

Im Betrieb der drei Laserscanner wird für jeden Messpunkt 22 derjenige Schwellenwert der adaptiven Schwellenwerte 32 herangezogen, der der Position des Messpunkts 22 zugeordnet ist. Auf diese Weise kann ein, im Vergleich zu dem herkömmlichen Schwellenwert 24, niedrigerer Schwellenwert verwendet werden, wodurch auch flachere Objekte 18 mittels der Laserscanner vermessen werden können.

### Bezugszeichenliste

- 10: Messung
- 12: Höhenmesswertsignal
- 14: Höhenmesswerte im Bereich eines Objekts
- 16: Erfassungsbereich
- 18: Objekt
- 20: Förderband
- 22: Messpunkt
- 24: herkömmlicher Schwellenwert
- 26: Schwellenwertverlauf des ersten Laserscanners
- 28: Schwellenwertverlauf des zweiten Laserscanners
- 30: Schwellenwertverlauf des dritten Laserscanners
- 32: adaptive Schwellenwerte

## Patentansprüche

1. Verfahren zur Vermessung eines Objekts (18) mittels zumindest eines ersten Laserscanners, welcher für eine Vielzahl von Messpunkten (22) Messwerte (12) erfasst, wobei zur Vermessung des Objekts (18) nur Messwerte (12) verwendet werden, die über einem vorbestimmten Schwellenwert liegen, wobei für zumindest zwei Bereiche von Messpunkten (22) des Laserscanners oder der Laserscanner ein jeweiliger Schwellenwert (32) separat ermittelt wird,
**dadurch gekennzeichnet, dass**
der jeweilige Schwellenwert (32) aufgrund des Einfallswinkels des Lichtsignals des Laserscanners auf das Objekt (18) berechnet wird.

2. Verfahren nach Anspruch 1,
**dadurch gekennzeichnet, dass**
der Schwellenwert (32) für jeden Messpunkt (22) des Laserscanners oder der Laserscanner separat ermittelt wird.

3. Verfahren nach Anspruch 1 oder 2,
**dadurch gekennzeichnet, dass**
der Schwellenwert (32) zusätzlich aufgrund des statistischen Rauschens des Messwerts (12) eines Messpunkts (22) berechnet wird.

4. Verfahren nach einem der vorstehenden Ansprüche,
**dadurch gekennzeichnet, dass**
der Schwellenwert (32) zusätzlich aufgrund einer gemessenen Distanz berechnet wird.

5. Verfahren nach einem der vorstehenden Ansprüche,
**dadurch gekennzeichnet, dass** der Schwellenwert (32) zusätzlich aufgrund einer bekannten Eigenschaft eines Hintergrunds (20) des Objekts (18) berechnet wird.

6. Verfahren nach einem der vorstehenden Ansprüche,
**dadurch gekennzeichnet , dass** der Schwellenwert (32) für jeden Messpunkt (22) des Laserscanners oder der Laserscanner in einer Nachschlagetabelle gespeichert wird.

7. Verfahren nach einem der vorstehenden Ansprüche,
**dadurch gekennzeichnet , dass** die Schwellenwerte (32) mittels eines FPGAs (Field Programmable Gate Array) oder einer GPU (Graphics Processing Unit) ermittelt und/oder ausgewählt werden.

8. Verfahren nach einem der vorstehenden Ansprüche,
**dadurch gekennzeichnet , dass** das Verfahren für jeden Messpunkt (22) des Laserscanners oder der Laserscanner wiederholt wird.

9. Verfahren nach einem der vorstehenden Ansprüche,
**dadurch gekennzeichnet , dass** zumindest ein zweiter Laserscanner verwendet wird, wobei sich die Erfassungsbereiche (16) des ersten Laserscanners und des zweiten Laserscanners zumindest bereichsweise überdecken und für Messpunkte (22) aus dem Überdeckungsbereich jeweils der niedrigere der ermittelten Schwellenwerte (32) ausgewählt wird.

10. Verfahren nach Anspruch 9,
**dadurch gekennzeichnet, dass**
zur Erfassung von Messwerten (12) für einen jeweiligen Messpunkt (22) derjenige Laserscanner verwendet wird, dem der niedrigere der ermittelten Schwellenwerte (32) zugeordnet ist.

11. Laserscanner zur Vermessung eines Objekts (18) in einem Erfassungsbereich (16), mit einem Lichtsender zur Aussendung von Lichtsignalen, einer Lichtablenkeinheit zur Ablenkung der vom Lichtsender ausgesandten Lichtsignale in den Erfassungsbereich (16), einem Lichtempfänger zum Empfang von von dem sich im Erfassungsbereich befindlichen Objekt (18) zurückgeworfenem Licht, wobei der Laserscanner ausgebildet ist, für eine Vielzahl von Messpunkten (22) Messwerte (12) zu erfassen und zur Vermessung des Objekts (18) nur Messwerte (12) zu verwenden, die über einem vorbestimmten Schwellenwert liegen, und wobei der Laserscanner eine Auswerteeinheit umfasst, welche ausgebildet ist, für zumindest zwei Bereiche von Messpunkten (22) einen jeweiligen Schwellenwert (32) separat zu ermitteln,
**dadurch gekennzeichnet, dass**
die Auswerteeinheit den für einen Messpunkt (22) verwendeten Schwellenwert (32) in Abhängigkeit des Einfallswinkels des Lichtsignals des Laserscanners auf das Objekt (18) berechnet.

12. Anordnung von zumindest zwei Laserscannern gemäß Anspruch 11, mit sich zumindest bereichsweise überdeckenden Erfassungsbereichen (16), **dadurch gekennzeichnet, dass**
die Auswerteeinheiten ausgebildet sind, für Messpunkte (22) aus dem Überdeckungsbereich jeweils den niedrigeren der ermittelten Schwellenwerte (32) auszuwählen.

13. Anordnung nach Anspruch 12,
**dadurch gekennzeichnet, dass** die Auswerteeinheiten ausgebildet sind, zur Erfassung von Messwerten (12) für einen jeweiligen Messpunkt (22) denjenigen Laserscanner zu verwenden, dem der niedrigere der ermittelten Schwellenwerte (32) zugeordnet ist.

14. Anordnung nach einem der Ansprüche 12 oder 13,
**dadurch gekennzeichnet, dass** die Auswerteinheiten der zumindest zwei Laserscanner durch eine gemeinsame Auswerteeinheit gebildet werden.

## Claims

1. A method of measuring an object (18) by means of at least one first laser scanner which detects measured values (12) for a plurality of measurement points (22), wherein only measured values (12) which lie above a predefined threshold value are used for measuring the object (18), wherein a respective threshold value (32) is determined separately for at least two ranges of measurement points (22) of the laser scanner or of the laser scanners; **characterized in that**
the respective threshold value (32) is calculated on the basis of the angle of incidence of a light signal of the laser scanner at the object (18).

2. A method in accordance with claim 1,
**characterized in that**
the threshold value (32) is determined separately for each measurement point (22) of the laser scanner or of the laser scanners.

3. A method in accordance with claim 1 or claim 2,
**characterized in that**
the threshold value (32) is additionally calculated on the basis of the statistical noise of the measured value (12) of a measurement point (22).

4. A method in accordance with any one of the preceding claims,
**characterized in that**
the threshold value (32) is additionally calculated on the basis of a measured distance.

5. A method in accordance with any one of the preceding claims,
**characterized in that**
the threshold value (32) is additionally calculated on the basis of a known property of a background (20) of the object (18).

6. A method in accordance with any one of the preceding claims,
**characterized in that**
the threshold value (32) is stored in a look-up table for each measurement point (22) of the laser scanner or of the laser scanners.

7. A method in accordance with any one of the preceding claims,
**characterized in that**
the threshold values (32) are determined and/or selected by means of an FPGA (field programmable gate array) or of a GPU (graphics processing unit).

8. A method in accordance with any one of the preceding claims,
**characterized in that**
the method is repeated for each measurement point (22) of the laser scanner or of the laser scanners.

9. A method in accordance with any one of the preceding claims,
**characterized in that**
at least one second laser scanner is used, with the detection zones (16) of the first laser scanner and of the second laser scanner overlapping at least regionally and the respective lower one of the determined threshold values (32) being selected for measurement points (22) from the overlap zone.

10. A method in accordance with claim 9,
**characterized in that**
that laser scanner is used for detecting measured values (12) for a respective measurement point (22) with which the lower one of the determined threshold values (32) is associated.

11. A laser scanner for measuring an object (18) in a detection zone (16), having a light transmitter for transmitting light signals, having a light deflection unit for deflecting into the detection zone (16) the light signals transmitted by the light transmitter, having a light receiver for receiving light reflected back by the object (18) located in the detection zone, wherein the laser scanner is configured to detect measured values (12) for a plurality of measurement points (22) and only to use measured values (12) for measuring the object (18) which lie above a predefined threshold value (32), and wherein the laser scanner comprises an evaluation unit which is configured to determine a respective threshold value (32) separately for at least two ranges of measurement points (22),
**characterized in that**
the evaluation unit calculates the threshold value (32) used for a measurement point (22) in dependence on the angle of incidence of the light signal of the laser scanner at the object (18).

12. An arrangement of at least two laser scanners in accordance with claim 11, having at least regionally overlapping detection zones (16),
**characterized in that**
the evaluation units are configured to select the respective lower one of the determined threshold values (32) for measurement points (22) from the overlap zone.

13. An arrangement in accordance with claim 12,
**characterized in that**
the evaluation units are configured to use that laser scanner for detecting measured values (12) for a respective measurement point (22) with which the lower one of the determined threshold values (32) is associated.

14. An arrangement in accordance with claim 12 or claim 13,
**characterized in that**
the evaluation units of the at least two laser scanners are formed by a common evaluation unit.

## Revendications

1. Procédé de mesure d'un objet (18) au moyen d'au moins un premier scanner à laser qui saisit des valeurs de mesure (12) pour une multitude de points de mesure (22) en utilisant, pour la mesure de l'objet (18), uniquement des valeurs de mesure (12) supérieures à une valeur seuil prédéterminée, et pour au moins deux plages de points de mesure (22) du scanner à laser ou des scanners à laser, on détecte séparément une valeur seuil respective (32),
**caractérisé en ce que**
l'on calcule la valeur seuil respective (32) en se basant sur l'angle d'incidence du signal lumineux du scanner à laser sur l'objet (18).

2. Procédé selon la revendication 1,
**caractérisé en ce que**
l'on détecte séparément la valeur seuil (32) pour chaque point de mesure (22) du scanner à laser ou des scanners à laser.

3. Procédé selon la revendication 1 ou 2,
**caractérisé en ce que**
l'on calcule la valeur seuil (32) en supplément en se basant sur le bruit statistique de la valeur de mesure (12) d'un point de mesure (22).

4. Procédé selon l'une des revendications précédentes,
**caractérisé en ce que**
l'on calcule la valeur seuil (32) en supplément en se basant sur une distance mesurée.

5. Procédé selon l'une des revendications précédentes,
**caractérisé en ce que**
l'on calcule la valeur seuil (32) en supplément en se basant sur une propriété connue d'un arrière-plan (20) de l'objet (18).

6. Procédé selon l'une des revendications précédentes,
**caractérisé en ce que**
l'on mémorise la valeur seuil (32) pour chaque point de mesure (22) du scanner à laser ou des scanners à laser dans un tableau de référence.

7. Procédé selon l'une des revendications précédentes,
**caractérisé en ce que**
l'on détecte et/ou on sélectionne les valeurs seuil (32) au moyen d'un FPGA (Field Programmable Gate Array) ou d'une GPU (Graphics Processing Unit).

8. Procédé selon l'une des revendications précédentes,
**caractérisé en ce que**
l'on répète le procédé pour chaque point de mesure (22) du scanner à laser ou des scanners à laser.

9. Procédé selon l'une des revendications précédentes,
**caractérisé en ce que**
l'on utilise au moins un second scanner à laser, les zones de saisie (16) du premier scanner à laser et du second scanner à laser se chevauchant au moins partiellement et, pour les points de mesure (22) de la zone de chevauchement, on sélectionne la valeur seuil plus petite parmi les valeurs seuils détectées (32).

10. Procédé selon la revendication 9,
**caractérisé en ce que**
pour saisir des valeurs de mesure (12) pour un point de mesure respectif (22), on utilise celui des scanners à laser auquel est associée la valeur seuil plus petite parmi les valeurs seuils détectées (32).

11. Scanner à laser pour la mesure d'un objet (18) dans une zone de détection (16), comportant un émetteur de lumière pour émettre des signaux lumineux, une unité de déviation de lumière pour dévier les signaux lumineux émis par l'émetteur de lumière vers la zone de détection (16), un récepteur de lumière pour recevoir la lumière renvoyée par l'objet (18) situé dans la zone de détection, dans lequel le scanner à laser est réalisé pour saisir des valeurs de mesure (12) pour une multitude de points de mesure (22) et pour utiliser uniquement celles des valeurs de mesure (12) pour mesurer l'objet (18) qui sont supérieures à une valeur seuil prédéterminée,
et le scanner à laser comprend une unité d'évaluation qui est réalisée pour détecter séparément une valeur seuil respective (32) pour au moins deux plages de points de mesure (22),
**caractérisé en ce que**
l'unité d'évaluation calcule la valeur seuil (32), utilisée pour un point de mesure (22), en fonction de l'angle d'incidence du signal lumineux du scanner à laser sur l'objet (18).

12. Agencement d'au moins deux scanners à laser selon la revendication 11, comportant des zones de détection (16) qui se chevauchent au moins partiellement,
**caractérisé en ce que**
les unités d'évaluation sont réalisées pour sélectionner la valeur seuil plus petite parmi les valeurs seuils détectées (32) pour des points de mesure (22) de la zone de chevauchement.

13. Agencement selon la revendication 12,
**caractérisé en ce que**
en vue de saisir des valeurs de mesure (12) pour un point de mesure respectif (22), les unités d'évaluation sont conçues pour utiliser celui des scanners à laser auquel est associée la valeur plus petite des valeurs seuils détectées (32).

14. Agencement selon l'une des revendications 12 ou 13,
**caractérisé en ce que**
les unités d'évaluation desdits du moins deux scanners à laser sont formées par une unité d'évaluation commune.
